# EUROPEAN PATENT APPLICATION

(11) **EP 1 699 239 A2**
(43) Date of publication of application: **06.09.2006**
(21) Application number: 06003583.9
(22) Date of filing: 22.02.2006
(51) Int. Cl.: H04N 7/16, H04N 5/45

(54) **Multi-room conditional access system**

(30) Priority: 04.03.2005 DE 202005003523 U
(71) Applicant: SCM Microsystems GmbH, 85737 Ismaning (DE)
(72) Inventor: Laperche, Yannick-Olivier, 85445 Oberding/Niederding (DE); Genevois, Christophe, 30500 Saint Brés (FR); Quillien, Guy, 83136 Rocbaron (FR)
(74) Representative: Degwert, Hartmut

(57) **Abstract**

For use in a multi-room conditional access system a conditional access module is provided that incorporates a master smartcard reader and a slave smartcard reader, descrambling means and a multi-room application safely stored inside of the module. The descrambling means for descrambling a data stream requires control words provided by a conditional access application in the module subject to the presence of a valid slave smartcard in the slave smartcard reader, and subject to being enabled by the multi-room application. The multi-room application enables the descrambling means only in presence of a valid master smartcard in the master smartcard reader. Each time the multi-room application enables the slave smartcard, the slave smartcard is enabled only for a limited period of time.

## Description

The present invention relates to a multi-room conditional access system for use in a pay TV environment.

Currently available conditional access systems require a user to have a conditional access module and an associated subscriber smartcard. With a valid subscriber smartcard the conditional access module is enabled to descramble a scrambled data stream such as a video program. In a multi-room scenario, where it is desired to view different programs at the same time, each user needs to have a conditional access module with a valid subscriber card inserted in the module.

The present invention proposes a multi-room conditional access system for use in a pay TV environment that supports a new concept where a subscriber can acquire a second subscription at a reduced price, but linked to the regular subscription. Specifically, the invention provides a multi-room conditional access system with a conditional access module that incorporates a master smartcard reader and a slave smartcard reader. The module also includes the usual descrambling means. A multi-room application is safely stored inside of the module. For descrambling of a data stream the descrambling means requires control words provided by a conditional access application in the module subject to the presence of a valid slave smartcard in the slave smartcard reader. The multi-room application enables the descrambling means only in presence of a valid master smartcard in the master smartcard reader. Accordingly, the second subscription can only be used when a valid regular subscriber card is available. After the descrambling means has been enabled, the master smartcard can be removed and used in another context. Preferably, however, the descrambling means remains enabled only for a limited period of time so that a redistribution of second subscription cards is prevented.

In the preferred embodiment, different limited periods of time can be associated with different channels in a pay TV environment where different contents are made available on different channels. This is an advantageous feature which permits the holder of the master smartcard to have control over the contents made available to a user of the slave smartcard, for example in a children's room. As a further improvement, the conditional access system incorporates a parental control that requires entry of a release code to enable the descrambler for contents of particular ratings.

The slave smartcard can be a removable card or can be embedded in the conditional access module. In case of a removable card, it is preferably implemented in the form factor of a SIM card, and the conditional access module is a PCMCIA card, also known as PC card, which incorporates a smartcard reader for a regular subscriber card and a SIM card reader for the second subscription smartcard.

Further advantages and features will appear from the following description of a preferred embodiment with reference to the appending drawings. In the drawings:
Fig. 1 is a schematic block diagram of the conditional access system for pay TV;
Fig. 2 is a view of a conditional access module and smartcard; and
Fig. 3 is a chart that illustrates a channel and time based entitlement management scheme.

The central element in the multi-room conditional access system of the invention is a conditional access module (CAM) 10 that incorporates a first smartcard reader "1" for a regular subscriber card, referred to as a master card 12, and a second smartcard reader "2" for a second subscription card, referred to as slave card 14. A conditional access application 16 is resident in the CAM and provides control words to a descrambler 18 within the CAM. The descrambler 18 receives a scrambled data stream "Video In" from a set-top box 20 and returns the descrambled data stream "Video Out" to the set-top box 20. In addition to being interfaced with the slave card, the conditional access application receives the conventional ECM and EMM messages.

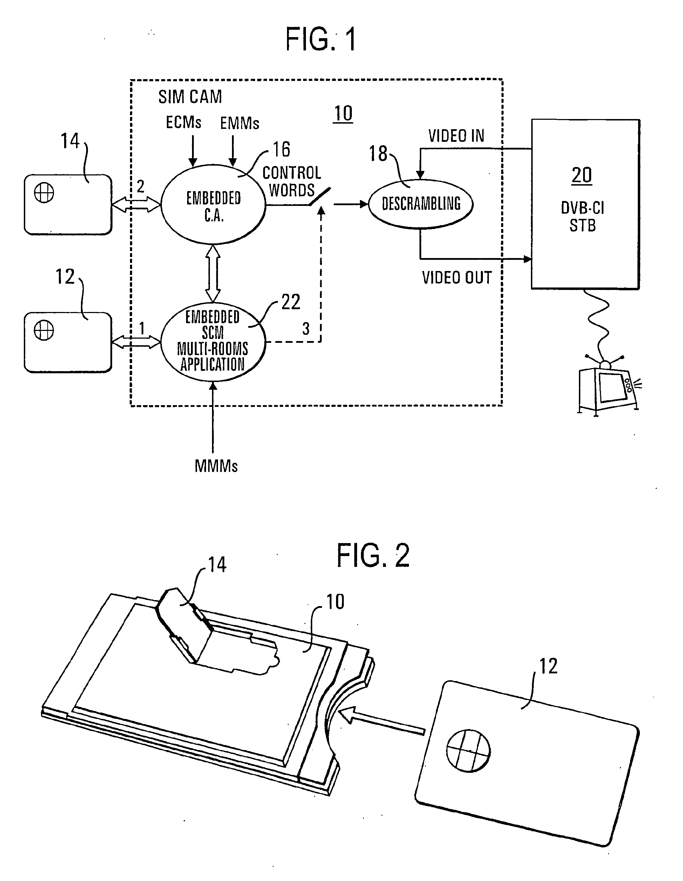

A multi-room application 22 is also resident within CAM 10. Multi-room application 22 interfaces with the master card 12 and with the conditional access application to selectively enable or disable the transmission of control words to the descrambler 18, as symbolized in the drawing by a controlled switch. The multi-room application 22 also receives operator commands (MMMs) from a remote control. In the embodiment shown, the set-top box 20 is a DVB receiver with a Common Interface (CI) and CAM 10 is a PC card with a CI connector. As illustrated in Fig. 2, CAM 10 incorporates a smartcard reader for the master card and a SIM card reader for the slave card which, as shown, is in the form factor of a usual SIM card.

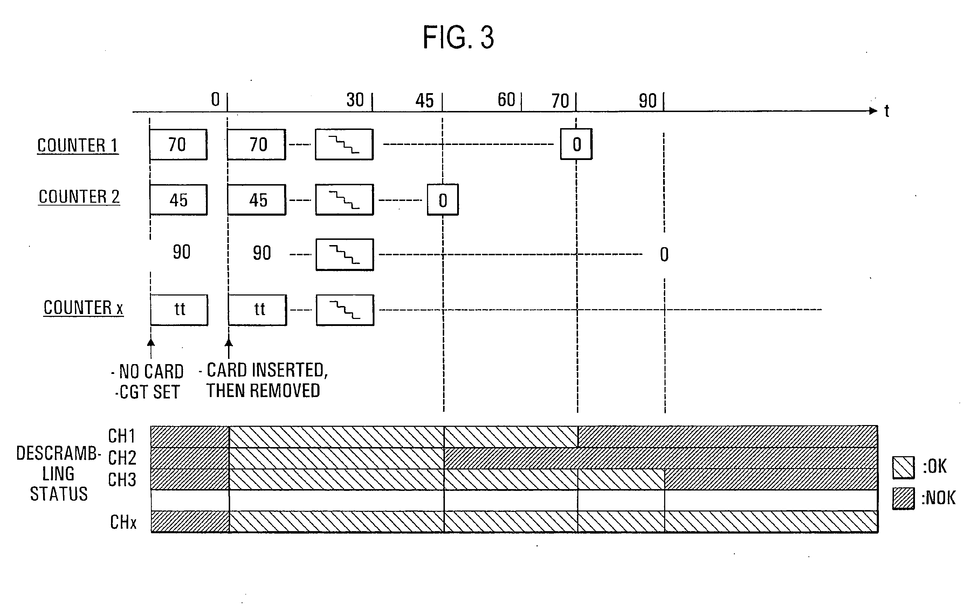

Fig. 3 illustrates the inventive concept of entitlement management for the second subscription. The slave card remains linked to the master card in that, for each viewing session, the descrambling process in the CAM is enabled only for a limited period of time. Each of the multiple channels has an associated counter. To enable the descrambling of a particular channel, the associated counter is loaded to an amount corresponding to the desired duration of time. The master card must be inserted when a counter is loaded. After loading the master card may be removed. Each channel has an associated limit corresponding to a maximum duration. The limits are typically different for different channels. During a viewing session, the associated counter is decremented. When the counter reaches zero, the descrambling process is disabled. To reload the counter, insertion of the master card is required. Alternatively, the master card remains inserted, and the counter is automatically reloaded after reaching zero.

In the preferred embodiment, the time and channel based entitlement management is combined with parental control. A parental rating threshold is stored within the CAM. The parental rating of a currently selected event is compared to the stored threshold. When the threshold is exceeded, entry of a PIN code is requested.

Every time a smartcard is inserted in the module, an authentication process occurs. If the inserted smartcard is not an authentic master card, it is not recognized, and the user is prompted to insert an "Operator Master Card".

When a module is used for the first time, a pairing process is performed. The pairing process consists in getting and storing in the module specific pairing information which will match with some master card information, e.g. its serial number. The pairing information is safely stored in a non-volatile memory of the module.

## Claims

1. A multi-room conditional access system comprising a conditional access module that incorporates a master smartcard reader and a slave smartcard reader, descrambling means and a multi-room application safely stored inside of the module, the descrambling means for descrambling a data stream requiring control words provided by a conditional access application in the module subject to the presence of a valid slave smartcard in the slave smartcard reader, and subject to being enabled by the multi-room application, and the multi-room application enabling the descrambling means only in presence of a valid master smartcard in the master smartcard reader.

2. The multi-room conditional access system according to claim 1, wherein each time the multi-room application enables the slave smartcard, the slave smartcard is enabled only for a limited period of time.

3. The multi-room conditional access system according to claim 2, wherein different limited periods of time can be associated with different channels in a pay TV environment where different contents are made available on different channels.

4. The multi-room conditional access system according to claim 3, wherein different maximum permitted amounts of time are associated with different kinds of contents.

5. The multi-room conditional access system according to any of the preceding claims, wherein the slave smartcard is implemented in a form factor of a SIM card.

6. The multi-room conditional access system according to claim 5, wherein the slave smartcard is removably associated with the conditional access module.

7. The multi-room conditional access system according to claim 6, wherein the conditional access module is implemented as a PCMCIA card that incorporates both of the master and slave smartcard readers.

8. The multi-room conditional access system according to claim 5, wherein the slave smartcard is embedded in the conditional access module.

9. The multi-room conditional access system according to any of the preceding claims, wherein the master smartcard is a regular pay TV subscriber card.

10. The multi-room conditional access system according to any of the preceding claims, wherein the conditional access module includes comparing means for comparing parental ratings of content events with a parental threshold stored in the module.
